# DEMANDE DE BREVET EUROPEEN

(11) **EP 1 862 775 A1**
(43) Date de publication de la demande: **05.12.2007**
(21) Numéro de dépôt: 06360023.3
(22) Date de dépôt: 31.05.2006
(51) Int. Cl.: G01D 5/38, G01D 5/347

(54) **Codeur de position à haute résolution**

(71) Demandeur: Delphi Technologies, Inc., Troy, Michigan 48007 (US); UNIVERSITE LOUIS PASTEUR, 67000 Strasbourg (FR)
(72) Inventeur: Tupinier, Laurent, 67116 Reichstett (FR); Michel, Johan, 67400 Illkirch (FR); Marroux, Olivier, 49000 Angers (FR); Ndao, Mandiaye, 67000 Strasbourg (FR); Kress, Bernard, 67350 Neubourg (FR)
(74) Mandataire: Littolff, Denis

(57) **Abrégé**

Codeur de position d'un premier élément en déplacement relativement à un second élément, ce dernier comportant un système optique doté d'au moins une source de lumière cohérente émettant un faisceau destiné à interférer, après collimation dans un diaphragme, avec le second élément et au moins un photodétecteur à cellules contiguës en ligne pour la détection du signal lumineux après interférence. Le second élément comporte une succession de cellules de codage primaires munies d'hologrammes diffractifs y définissant chacun un emplacement unique, les cellules interférant successivement avec le faisceau de lumière au cours de leur déplacement relatif. Le signal diffracté est envoyé vers le ou les photodétecteurs pour la mesure de position absolue.

Le codeur comporte une série de cellules de codage secondaires munies d'hologrammes diffractifs interférant successivement avec le faisceau de lumière.

Lesdites cellules sont munies d'un hologramme identique diffractant la lumière incidente en des taches lumineuses de diffraction disposées alignées, ledit hologramme comportant une modulation, sous forme d'une rayure ou plusieurs rayures identiques disposées parallèlement, qui module le signal diffracté en l'orientant à chaque instant perpendiculairement à la tangente à ladite rayure à mesure que le faisceau collimaté se déplace relativement à la cellule, la position du centre de la tache diffractive d'ordre O restant inchangée. Au moins un photodétecteur de position relative est prévu orienté de manière à correspondre au déplacement d'une tache lumineuse de diffraction produite par la cellule de codage secondaire.

## Description

La présente invention concerne un codeur de position à haute résolution et un procédé de codage utilisant les caractéristiques d'un tel codeur.

Le problème que se propose de résoudre l'invention est le codage de la position d'un premier élément en déplacement relativement à un second élément, ce dernier comportant un système optique doté d'au moins une source de lumière cohérente émettant un faisceau destiné à interférer avec le second élément, un diaphragme de collimation du faisceau et au moins un photodétecteur à cellules contiguës en ligne pour la détection du signal lumineux après interférence avec le second élément.

Celui-ci comporte une succession de cellules de codage primaires munies d'hologrammes diffractifs y définissant chacun un emplacement unique. Ces cellules interfèrent successivement avec le faisceau de lumière au cours de leur déplacement relatif, le signal diffracté étant envoyé vers le ou les photodétecteurs pour la mesure de la position absolue de l'un par rapport à l'autre.

L'utilisation d'hologrammes diffractifs, en réalité des hologrammes générés par ordinateur, pour le codage absolu de la position d'un organe en mouvement par rapport à un autre, est connue. Une telle configuration est par exemple appliquée à des capteurs angulaires, permettant par conséquent la mesure de la position angulaire d'un élément rotatif par rapport à un système fixe. L'avantage de l'utilisation des hologrammes diffractifs générés par ordinateur est que le signal diffracté obtenu permet l'obtention, sur le photodétecteur, d'un code optique numérique, c'est-à-dire composé de taches allumées (bit 1) et de taches éteintes (bit 0) immédiatement exploitables en sortie du photodétecteur en tant que code numérique électronique qui peut être directement traité par un microcontrôleur. Par ailleurs, les hologrammes diffractifs offrent une stabilité du signal sur l'ensemble de la surface de la cellule de codage, ce qui permet de simplifier l'intégration mécanique du codeur dans la configuration dans laquelle il doit être monté.

Toutefois, à l'heure actuelle, il n'est possible de réaliser des cellules de codage à hologrammes diffractifs que d'une taille minimale donnée, de l'ordre de 50 microns, ce qui ne permet pas d'atteindre des résolutions suffisamment élevées pour certaines applications.

Le codeur de position de l'invention remédie à cet inconvénient, en proposant une solution qui permet d'accroître dans des proportions importantes la résolution et la précision, d'une manière au surplus simple et économiquement peu onéreuse à la fabrication.

A cet effet, le codeur de position de l'invention, obéissant aux caractéristiques précitées, c'est-à-dire comportant une succession de cellules de codage primaires munies d'hologrammes diffractifs y définissant chacun un emplacement unique, les cellules interférant successivement avec le faisceau de lumière cohérente collimaté au cours du déplacement relatif du premier élément par rapport au second élément, le signal diffracté étant ensuite envoyé vers le ou les photodétecteurs de position absolue, se caractérise à titre essentiel en ce que le codeur comporte une série de cellules de codage secondaires munies d'hologrammes diffractifs interférant successivement avec le faisceau de lumière ;
lesdites cellules étant munies d'un hologramme identique diffractant la lumière incidente en des taches lumineuses de diffraction disposées alignées, ledit hologramme comportant une modulation, sous forme d'une rayure ou de plusieurs rayures identiques disposées parallèlement, qui module le signal diffracté en l'orientant à chaque instant perpendiculairement à la tangente à chaque rayure à mesure que le faisceau collimaté se déplace relativement à la cellule, la position du centre de la tache diffractive d'ordre 0 restant inchangée ;
au moins un photodétecteur de position relative étant orienté de manière à correspondre au trajet d'une tache lumineuse de diffraction produite par la cellule de codage secondaire.

Alternativement, les cellules de codage secondaires peuvent seulement comporter un réseau, et être dépourvues d'hologramme.

Le principe de base de ce codeur haute résolution repose en fait sur l'interférence d'un faisceau de lumière cohérente, par exemple laser, avec une modulation, c'est à dire un motif de courbure régulière. En observant une tache, si possible d'ordre supérieur ou égal à 1 en valeur absolue dans le cas de solution à hologramme, celle-ci se déplace puisque l'alignement constituant le signal diffracté effectue en fait une rotation d'axe centré dans la tache d'ordre 0. Le déplacement de la tache d'ordre supérieur ou égal à 1 est en réalité assimilable à cette échelle à une translation, d'où la possibilité d'utiliser également un photodétecteur à cellules contiguës en ligne. Selon la cellule éclairée par la tache, on connaît très exactement la position du faisceau incident collimaté à l'intérieur de la cellule de codage secondaire, c'est-à-dire la position relative précise du premier élément par rapport au second élément dans cette fraction de la rotation.

Il en va de même pour l'unique tache générée en réseau.

En fait, la résolution et la précision sont réglées d'une part par l'effet d'amplification du mouvement donné par le tracé de la ou des rayures, et d'autre part par la finesse des cellules de lecture du photodétecteur. Si la rayure présente un rayon de courbure, plus il est petit et meilleure sera la résolution. Parallèlement, plus les cellules de photodétecteur sont petites et meilleure sera la résolution.

Selon une configuration possible, la modulation est portée par un support distinct et solidaire du second élément, transparent à la lumière et sur lequel sont pratiquées les rayures de la modulation.

Compte tenu de la nature du déplacement de la tache considérée, le ou les photodétecteurs de position relatifs sont orientés sensiblement parallèlement au sens du déplacement, au moins à l'échelle d'une cellule de codage secondaire.

Un tel "parallélisme" est tout à fait applicable à un codeur de position angulaire dont le mouvement est rotatif, le parallélisme en question s'appliquant alors à la tangente à la trajectoire circulaire sur l'arc angulaire limité couvert par une cellule de codage secondaire.

Selon une possibilité préférentielle, la rayure ou les rayures identiques striant l'hologramme diffractif des cellules de codage secondaires est (sont) en arc de cercle.

La modification continue d'orientation des normales modifie dans ce cas de façon également continue l'orientation de la ligne des taches de diffraction obtenue à l'aide des hologrammes des cellules de codage secondaires, ladite ligne effectuant une rotation. En suivant une tache, de préférence la plus éloignée possible de l'ordre central 0, ce qui nécessite cependant qu'elle soit suffisamment éclairée, l'approximation de son déplacement en un trajet rectiligne est correcte.

De préférence, le faisceau de lumière cohérente est produit par une diode laser. Un tel composant, peu onéreux, produit un faisceau de lumière cohérente parfaitement adapté à une telle application.

Selon une configuration possible, la collimation du faisceau est réalisée au moyen d'un diaphragme comportant une première portion radiale située en regard des cellules de codage primaires et une seconde portion d'allure parallèle au déplacement au niveau des cellules de codage secondaires.

De préférence encore, les deux portions débouchent l'une dans l'autre, le diaphragme présentant alors une forme en T.

Dans une configuration simplifiée, une diode et le diaphragme sont disposés d'un côté de l'élément mobile, et les photodétecteurs sont disposés de l'autre côté, suivant la même orientation que les portions du diaphragme.

Le second élément peut par exemple être un disque animé d'un mouvement rotatif , muni de deux pistes concentriques, une piste composée des cellules de codage primaires, et une piste comprenant des cellules de codage secondaires. Une application possible peut être une colonne de direction de véhicule automobile munie d'un capteur d'angle, le disque étant alors fixe à la colonne.

Une configuration rotative n'est bien entendu pas la seule qui peut être mise en oeuvre avec un codeur de position selon l'invention. En particulier, le codage d'un déplacement relatif en translation, par exemple si le second élément prend la forme d'une réglette sur laquelle est disposée une bande comportant des cellules de codage axial, est parfaitement envisageable avec l'invention.

Celle-ci concerne également un procédé de codage à haute résolution du déplacement relatif d'un premier élément par rapport à un second élément au moyen d'un codeur tel que décrit auparavant, caractérisé à titre essentiel par les étapes suivantes :
- lecture sur le ou les photodétecteurs de position absolue de l'emplacement de la cellule de codage primaire sur le premier élément ;
- lecture simultanée sur le ou les photodétecteurs de position relative de la position d'une tache lumineuse de diffraction de préférence d'ordre supérieur ou égal à 1 en valeur absolue.

L'invention va à présent être décrite plus en détails, en référence aux figures annexées, pour lesquelles :
- la figure 1 montre une cellule de codage secondaire selon la présente invention ;
- la figure 2 montre le résultat, sur le photodétecteur, du déplacement d'une tache d'ordre supérieur à l'ordre 0 ;
- la figure 3 montre l'implantation de cellules de codage secondaires sur un support muni d'hologrammes diffractifs.

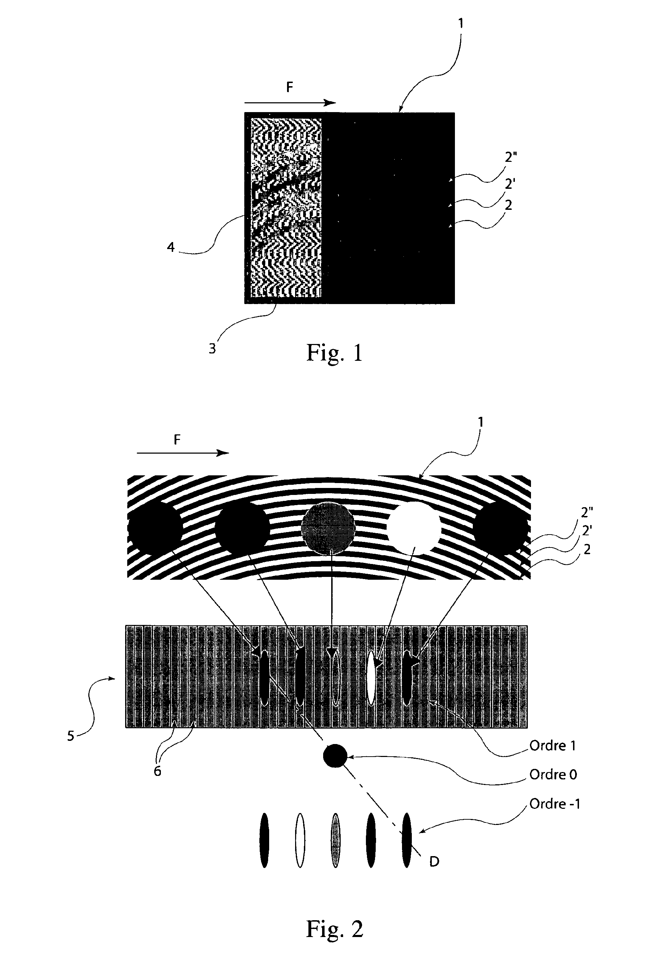

En référence à la figure 1, la cellule de codage secondaire (1) présente une modulation en ce qu'elle est striée de rayures (2, 2', 2"...) qui modulent le signal initialement généré par l'hologramme (3) généré par ordinateur qui couvre la cellule (1). Cet hologramme (3) est par exemple constitué sur un support transparent, et les interruptions constituées par les rayures (2 2', 2"...) laissent par conséquent passer le faisceau lumineux. Lorsque le support comportant la cellule de codage secondaire (1), fixée au second élément mobile relativement au premier, se déplace, le rayon délimité par le diaphragme (4), en l'occurrence à fente d'allure rectangulaire, se déplace dans la direction de la flèche (F).

L'hologramme (3) est en l'occurrence calculé pour que le signal diffracté soit constitué de taches lumineuses réparties sur une droite. La tache centrale la plus lumineuse correspond à l'ordre 0 de diffraction, et les taches suivantes, dans les deux sens à partir de cette tache centrale constituent les ordres suivants du signal diffracté. C'est ce que montre la figure 2. Pour simplifier la figure, seuls les ordres 0, 1 et -1 on été représentés sur cette figure. Il existe une correspondance des niveaux de gris entre les positions respectives du faisceau incident par rapport à la cellule de codage élémentaire (1) sur laquelle les rayures (2, 2', 2"..) en arc de cercle ont été représentées et les droites passant par l'ordre 0 reflétant chacune de ces positions. Une seule de ces droites (D) a été représentée pour ne pas alourdir le schéma.

En fait, la droite (D) tourne par rapport à un axe passant par l'axe optique, c'est à dire centralement dans la tache d'ordre 0. C'est le résultat de la modulation réalisée, au cours du mouvement du rayon collimaté dans la direction (F) par rapport à la cellule de codage secondaire (1). En toute rigueur, les différentes taches correspondant à l'ordre 1, à l'ordre -1 et aux ordres supérieurs décrivent un arc de cercle. Toutefois, à l'échelle d'une cellule de codage (1), cet arc de cercle peut être correctement approximé en une portion de droite. C'est la raison pour laquelle il est possible de procéder à une détection à l'aide d'un photodétecteur (5) à cellules contiguës disposées sur une ligne. Sur ce photodétecteur (5), les différentes cellules (6) peuvent être assimilées à une échelle de codage supplémentaire qui permet d'affiner sensiblement et localement la précision de la mesure. Ainsi, si on prend l'exemple d'une roue codeuse munie d'une piste circulaire de cellule de codage primaire permettant un codage absolu avec une résolution de 1°, l'utilisation d'un photodétecteur à 32 cellules de détection permet d'aboutir à une résolution de l'ordre de 0,03 °.

L'utilisation d'un photodétecteur à 64 cellules permet encore d'augmenter la résolution et la précision de la lecture, jusqu'à 0,015°.

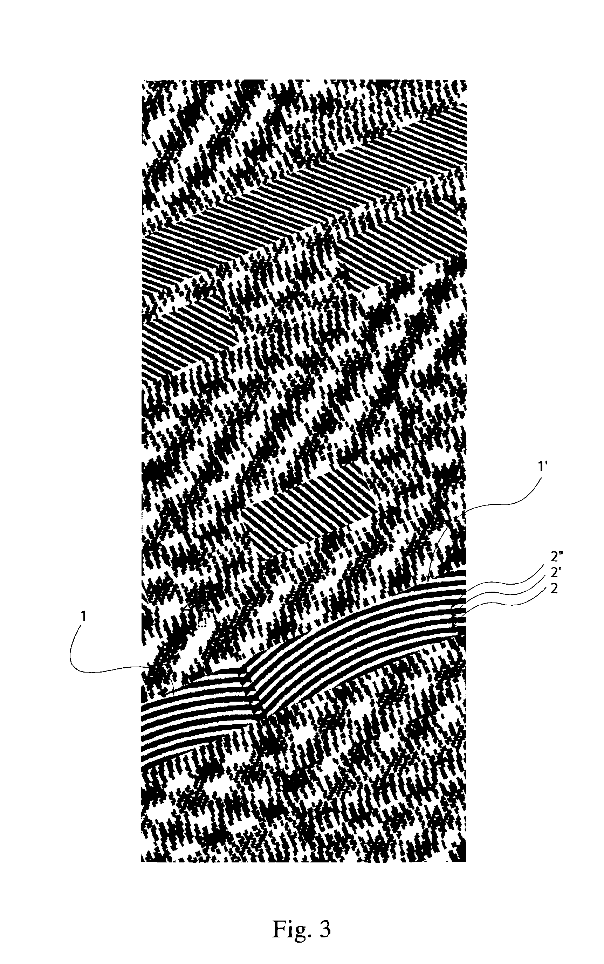

La figure 3 montre une fraction d'un élément mobile sur lequel sont disposés des hologrammes générés par ordinateur, constituant des cellules de codage secondaires (1, 1') juxtaposées, l'ensemble de l'élément mobile en étant muni sur la totalité du trajet codé. Ces cellules pourraient ne comporter qu'un réseau, et être dépourvues d'hologramme.

Comme on l'a déjà souligné, la configuration du codeur peut être rotative, mais également être conçue pour d'autres types de déplacements, par exemple rectilignes translatifs. De même, la forme des rayures n'est qu'indicative et n'est pas limitative de cette invention. Il pourrait s'agir de portions de droite formant un signal triangulaire, ou de courbes dont le déplacement de la normale change de sens au cours de la progression relativement à une cellule (1) de codage secondaire, à condition que le photodétecteur et/ou le programme de traitement des informations recueillies permette la gestion de ce type de courbes.

Les signaux recueillis sur les photodétecteurs peuvent le cas échéant faire l'objet d'une détection selon un seuil de luminosité, ou par calcul du centre de gravité de la zone lumineuse, afin d'être bien sûr de la ou des cellules du photodétecteur qui sont réellement excitées. Le traitement des signaux obtenus sur les photodétecteurs s'effectue de préférence par un programme implanté sur un microcontrôleur.

## Revendications

1. Codeur de position d'un premier élément en déplacement relativement à un second élément, ce dernier comportant un système optique doté d'au moins une source de lumière cohérente émettant un faisceau destiné à interférer, après collimation dans un diaphragme, avec le second élément et au moins un photodétecteur à cellules contiguës en ligne pour la détection du signal lumineux après interférence, ledit second élément comportant une succession de cellules de codage primaires munies d'hologrammes diffractifs y définissant chacun un emplacement unique, les cellules interférant successivement avec le faisceau de lumière au cours de leur déplacement relatif, le signal diffracté étant envoyé vers le ou les photodétecteurs pour la mesure de position absolue, **caractérisé en ce que** le second élément comporte une série de cellules de codage secondaires munies d'hologrammes diffractifs interférant successivement avec le faisceau de lumière ;
lesdites cellules étant munies d'un hologramme identique diffractant la lumière incidente en taches lumineuses de diffraction disposées alignées, ledit hologramme comportant une modulation, sous la forme d'une rayure ou de plusieurs rayures identiques disposées parallèlement, qui module le signal diffracté en l'orientant à chaque instant perpendiculairement à la tangente à chaque rayure à mesure que le faisceau collimaté se déplace relativement à la cellule, la position du centre de la tache diffractive d'ordre O restant inchangée ; au moins un photodétecteur de position relative étant orienté de manière à correspondre au trajet d'une tache lumineuse produite par la cellule de codage secondaire.

2. Codeur de position selon la revendication 1, **caractérisé en ce que** les cellules de codage secondaires comportent un réseau et sont dépourvues d'hologrammes.

3. Codeur de position selon l'une des revendications précédentes, **caractérisé en ce que** la modulation est portée par un support distinct et solidaire du second élément, transparent à la lumière et sur lequel sont pratiquées les rayures de la modulation.

4. Codeur de position selon l'une quelconque des revendications précédentes, **caractérisé en ce que** le ou les photodétecteurs de position relative sont orientés sensiblement parallèlement au sens du déplacement à l'échelle d'une cellule de codage secondaire.

5. Codeur de position selon l'une des revendications précédentes, **caractérisé en ce que** la rayure ou les rayures identiques striant l'hologramme diffractif ou le réseau des cellules de codage secondaires est (sont) en arc de cercle.

6. Codeur de position selon l'une quelconque des revendications précédentes, **caractérisé en ce que** le faisceau de lumière cohérente est produit par une diode laser.

7. Codeur de position selon l'une quelconque des revendications précédentes, **caractérisé en ce que** le faisceau est délimité au moyen d'un diaphragme comportant une première portion radiale située en regard des cellules de codage primaires et une seconde portion d'allure parallèle au déplacement au niveau des cellules de codage secondaires.

8. Codeur de position selon la revendication précédente, **caractérisé en ce que** les deux portions débouchent l'une dans l'autre, le diaphragme présentant une forme en T.

9. Codeur de position selon l'une quelconque des revendications précédentes, **caractérisé en ce que** le second élément est un disque animé d'un mouvement rotatif, muni de deux pistes concentriques, une piste composée des cellules de codage primaires, et une piste comprenant des cellules de codage secondaires.

10. Codeur de position selon la revendication précédente, **caractérisé en ce que** le disque est fixé à une colonne de direction du véhicule automobile et fait partie d'un capteur d'angle.

11. Procédé de codage à haute résolution du déplacement relatif d'un premier élément par rapport à un second élément au moyen d'un codeur selon les revendications précédentes, **caractérisé par** les étapes suivantes :
- lecture sur le ou les photodétecteurs de position absolue de l'emplacement de la cellule de codage primaire sur le premier élément ;
- lecture simultanée sur le ou les photodétecteurs de position relative de la position d'une tache lumineuse de diffraction de préférence d'ordre supérieur ou égal à 1 en valeur absolue.
